Europäisches Patentamt

(19) European Patent Office

Office européen des brevets

(11) Numéro de publication : **0 315 524 B1**

(12) ## FASCICULE DE BREVET EUROPEEN

(45) Date de publication du fascicule du brevet :
06.11.91 Bulletin 91/45

(51) Int. Cl.⁵ : **F02K 1/72, F02K 1/09**

(21) Numéro de dépôt : **88402749.1**

(22) Date de dépôt : **03.11.88**

(54) **Inverseur de poussée de turboréacteur à grilles, à section variable d'éjection.**

(30) Priorité : 05.11.87 FR 8715336

(43) Date de publication de la demande :
10.05.89 Bulletin 89/19

(45) Mention de la délivrance du brevet :
06.11.91 Bulletin 91/45

(84) Etats contractants désignés :
DE ES FR GB GR IT NL SE

(56) Documents cités :
FR-A- 2 184 021
GB-A- 1 116 779
GB-A- 2 189 550
US-A- 3 779 010

(73) Titulaire : HISPANO-SUIZA Société anonyme dite:
333, Bureaux de la Colline
F-92213 Saint Cloud (FR)

(72) Inventeur : Barbarin, Jacques Marie Gilbert
80, rue Guillaume Apollinaire
F-76290 Montivilliers (FR)
Inventeur : Lecoutre, Pascal Bruno Georges
56, rue Labedoyere
F-76600 Le Havre (FR)

(74) Mandataire : Moinat, François
S.N.E.C.M.A. Service des Brevets Boîte
Postale 81
F-91003 Evry Cédex (FR)

## Description

La présente invention concerne un inverseur de poussée du flux secondaire d'un turboréacteur à double flux dans lequel un capotage, formant, lors du fonctionnement du turboréacteur en poussée directe, l'extrémité aval de la paroi externe du canal annulaire de circulation de la veine de flux secondaire, est susceptible d'être déplacé axialement en direction aval au moyen d'un système de commande comportant par exemple des vérins fixés sur la partie fixe amont de l'inverseur et un déplacement du capotage vers l'aval entraîne le pivotement d'une pluralité de volets qui viennent obstruer le canal et dévier le flux pour former un flux inversé dont le guidage est obtenu au moyen d'un dispositif à grilles disposées sur la périphérie externe dudit canal et qui sont découvertes après déplacement vers l'aval dudit capotage. Dans des réalisations connues d'un tel inverseur de poussée de turboréacteur, l'inverseur de poussée est constitué de deux parties, chaque partie comportant une partie demi-cylindrique dudit capotage aval dont les moyens de déplacement comportent par exemple, deux vérins et le pivotement desdits volets est guidé par exemple par des biellettes de liaison à un point fixe d'articulation de biellette situé sur la paroi interne dudit canal secondaire.

Des exemples de réalisation de tels inverseurs de poussée sont donnés par EP-A-0109219 et par US-A-3500645. Ces dispositions connues assurent un fonctionnement satisfaisant et de bons résultats lors d'un fonctionnement en poussée directe du turboréacteur à double-flux, notamment pendant les phases de vol de l'avion en croisière. En effet, une surface de délimitation externe de la veine secondaire, aérodynamique et continue, est obtenue par l'escamotage dans la paroi externe du canal secondaire des volets mobiles d'inverseur et grâce à un raccordement adéquat entre les faces internes respectives de la paroi interne de la partie amont fixe de l'inverseur, des volets et de la paroi interne du capotage aval mobile et de même la face externe des parois externes raccordées respectives dudit capotage aval et de la partie amont fixe de l'inverseur constitue une surface aérodynamique continue de délimitation du flux extérieur. Les performances recherchées de l'inversion de poussée sont également obtenues de manière généralement satisfaisantes par ces dispositions connues. Il subsiste toutefois un problème concernant le fonctionnement à pleine puissance du turboréacteur, notamment durant les phases de décollage de l'avion, pour lequel les sections optimales de la tuyère secondaire d'éjection qui ont été définies pour les conditions de vol en croisière ne sont plus adaptées.

US-A-3779010 décrit un inverseur de poussée du type à grilles et à capot coulissant et volets pivotants dans lequel un coulissement partiel en direction aval de l'ensemble des éléments mobiles est susceptible de dégager à l'extrémité amont des grilles un passage entre partie fixe amont et partie mobile, modifiant ainsi la section de tuyère.

FR-A-2184021 décrit une tuyère à section de passage variable et capotage coulissant à deux parties annulaires, associée à une soufflante à pas variable et à inversion de pas.

GB-A-2189550 décrit une turbomachine comportant des moyens de contrôle du flux comprenant un capotage mobile qui dans une première position dégage un passage sur le bord arrière d'une partie fixe amont de manière à augmenter la section de sortie et dans une seconde position entraîne des volets d'inversion et dégage un passage du flux inversé dans lequel viennent se placer des grilles mobiles translatables. Le but de l'invention est d'apporter une solution améliorée dans la réalisation d'un inverseur de poussée qui présente des résultats satisfaisants dans toutes les conditions requises de fonctionnement et notamment en permettant une adaptation de la section de tuyère à ces conditions.

Un inverseur de poussée répondant à ces objectifs est caractérisé en ce que chaque demi-capotage aval mobile de l'inverseur comporte deux parties susceptibles d'être reliées par des moyens à verrou, une partie amont de capotage mobile susceptible d'être reliée par un verrou à la partie fixe amont de l'inverseur et une partie aval de capotage mobile susceptible d'être déplacée au moyen d'au moins un vérin selon une direction axiale vers l'aval, soit en entraînant la partie amont verrouillée sur ladite partie aval et libérée de son verrouillage sur la partie fixe amont, soit indépendamment de la partie amont après libération de leur verrou mutuel, la partie amont restant verrouillée sur la partie fixe amont de manière, selon les cas, à masquer les grilles de l'inverseur dans un fonctionnement en poussée directe correspondant à une phase de vol en croisière de l'avion ou à découvrir les grilles d'inversion dans un fonctionnement en inversion de poussée ou à laisser les grilles d'inversion masquées tout en procurant une augmentation de la section de sortie de la tuyère secondaire d'éjection correspondant à un fonctionnement du turboréacteur à pleine puissance, au moyen d'un passage dégagé en aval des grilles d'inversion.

D'autres caractéristiques et avantages de l'invention seront mieux compris à la lecture qui va suivre d'un mode de réalisation de l'invention, en référence aux dessins annexés sur lesquels :

    —— la figure 1 représente une demi-vue schématique d'un inverseur de poussée conforme à l'invention, selon une coupe par un plan passant par l'axe de rotation du turboréacteur, dans une position rétractée ;

    —— la figure 1a représente une vue schématique en perspective avant de l'inverseur de poussée représenté à la figure 1 ;

— la figure 2 montre, selon une vue analogue à celle de la figure 1, l'inverseur de poussée représenté aux figures 1 et 1a, dans une position déployée ;

— la figure 2a montre selon une vue analogue à celle de la figure 1a, l'inverseur de poussée dans la position déployée de la figure 2 ;

— la figure 3 montre, selon une vue analogue à celle des figures 1 et 2, l'inverseur de poussée dans une position correspondant à un fonctionnement en poussée directe avec variation de la section de tuyère secondaire ;

— La figure 3a montre, selon une vue analogue à celles des figures 1a et 2a, l'inverseur de poussée dans la position à variation de section de tuyère de la figure 3.

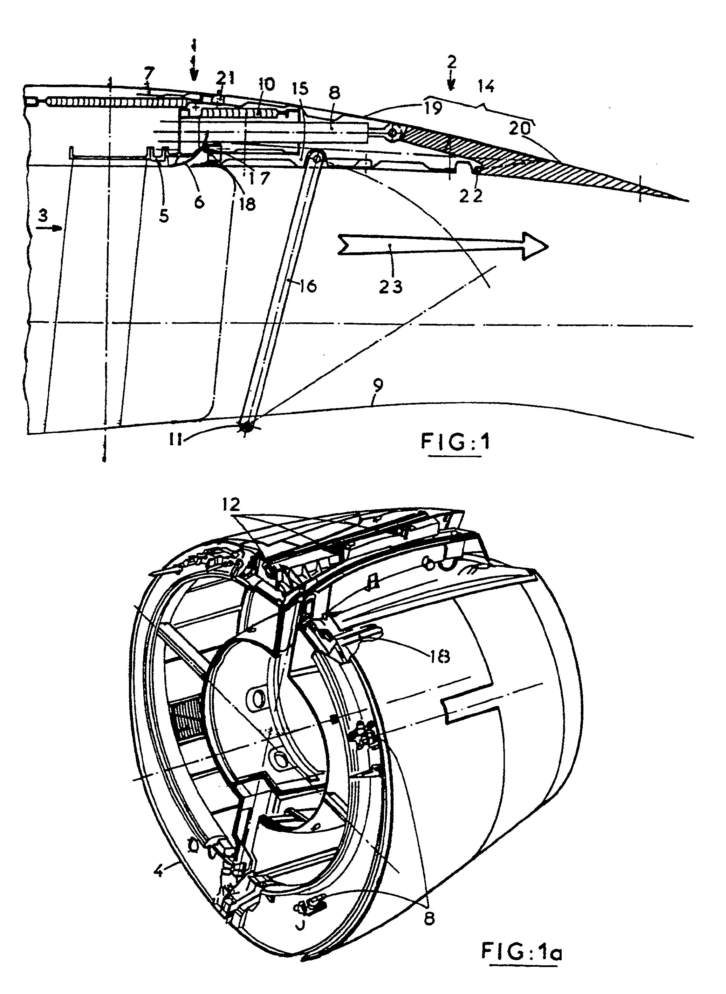

L'inverseur de poussée conforme à l'invention représenté aux figures 1 et 1a se compose d'une structure fixe 1 et d'une structure mobile 2. La structure fixe 1 comporte un cadre avant 3 comportant l'ensemble annulaire 4 de liaison au turboréacteur vers l'amont, un caisson périphérique interne 5 formant un bord de déviation 6 et un caisson périphérique externe 7 dont la forme extérieure s'adapte à la forme de nacelle. Sur le cadre avant sont fixés les vérins 8 de manoeuvre de la structure mobile 2, par exemple au nombre de deux par demi-ensemble. La structure fixe 1 comporte également un capot primaire 9 et des grilles de déviation 10. Ledit capot primaire 9 forme la paroi interne de délimitation de la veine secondaire et sur le capot primaire 9 sont fixées des ferrures 11 d'attache de biellettes.

Les grilles de déviation 10 forment un ensemble périphérique annulaire et elles comportent des profils de différentes formes dont l'orientation est ajustée de manière optimale d'avant en arrière afin d'obtenir les performances d'inversion en assurant un guidage optimal du flux inversé. La structure fixe 1 est en outre aménagée pour recevoir les pylônes de support de l'inverseur de poussée, de manière connue en soi et elle porte également les divers éléments de fixation et de guidage de la structure mobile 2 de l'inverseur, notamment des charnières 12 d'articulation des demi-capotages mobiles et des glissières 13 de translation axiale disposées en partie haute et en partie basse. La structure mobile 2, comme la structure fixe 1, se compose de deux demi-ensembles de manière que l'inverseur de poussée forme un canal annulaire en forme de deux C accolés et chaque demi-ensemble comporte un demi-capotage 14 externe, mobile en translation axiale sur lequel est fixé un demi-ensemble annulaire de volets 15 pivotants.

Chaque volet mobile 15 est relié par une biellette 16 à la ferrure 11 d'articulation du capot primaire 9 et il pivote autour de l'articulation 17 de fixation sur la structure mobile, disposée à l'avant. Le capotage 14 porte un rail 18 qui coopère avec la glissière 13 de la structure fixe 1, dans laquelle il coulisse, selon un mode de réalisation qui est par exemple décrit en détails par EP-A 0055163. De manière remarquable conforme à l'invention, chaque demi-capotage 14 comporte deux parties, respectivement amont 19 et aval 20. Le demi-capotage 14 comporte des moyens de verrouillage disposés en deux endroits, respectivement en amont où le verrou 21 assure le blocage du demi-capotage 14 mobile en position rétractée sur la structure fixe 1 et entre les deux parties amont 19 et aval 20, où le verrou 22 assure le verrouillage mutuel solidarisant les deux dites parties amont 19 et aval 20. Lesdits moyens de verrouillage 21 et 22 se composent d'éléments coopérants respectivement solidaires de chaque partie et sont d'un type connu et couramment utilisé tels que verrou à griffes ou à crochet et sont associés à tout type de commande connu, hydraulique, électrique ou pneumatique, asservi au système général de commande de l'inverseur de poussée, également d'un type connu et qui n'a pas besoin d'être décrit plus en détails pour permettre une réalisation par un homme du métier généralement informé des techniques concernées.

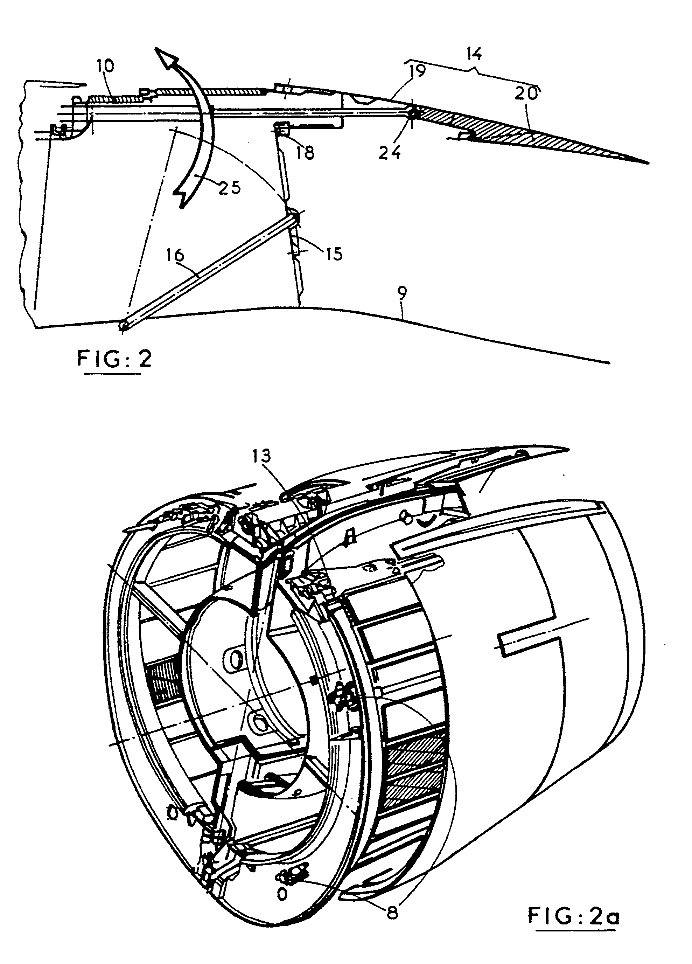

Quelques explications complémentaires, en référence aux figures 1 et 1a, 2 et 2a 3 et 3a correspondant respectivement à trois modes de fonctionnement différents, vont être données concernant le fonctionnement de l'inverseur de poussée conforme à l'invention qui vient d'être décrit et d'où ressortent des avantages de l'invention. Dans le fonctionnement en poussée directe, correspondant à une phase de vol en croisière de l'avion notamment, le flux secondaire, représenté par la flèche 23 sur la figure 1, circule dans le canal secondaire, entre la paroi interne constituée par le capot primaire 9 et la paroi externe constituée par les surfaces internes respectives du caisson interne 5 du cadre avant 3 de la structure fixe 1 de l'inverseur, des volets 15 en position rétractée et du capotage mobile 14, notamment de sa partie aval 20. Lesdites surfaces internes forment dans ce cas une paroi de délimitation aérodynamique continue de la veine secondaire.

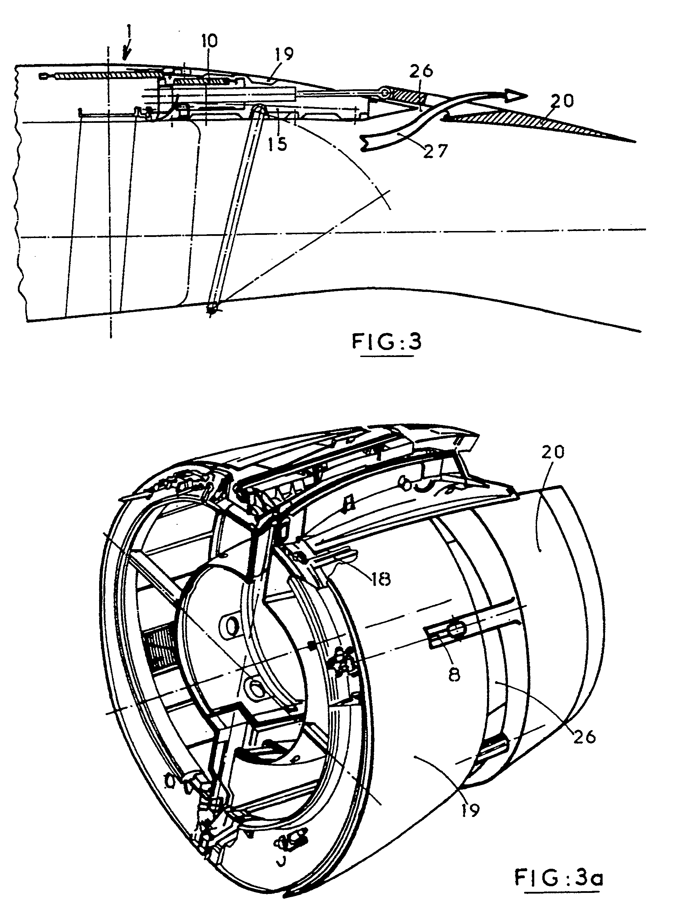

Le capotage externe mobile 14 est verrouillé dans ce cas par le verrou 21 sur la structure fixe 1 de l'inverseur et la partie aval 20 est verrouillée par le verrou 22 sur la partie amont 19 du capotage mobile 14. Les surfaces externes respectives du caisson externe 7 du cadre avant 3 de la structure fixe 1 de l'inverseur et du capotage externe mobile 14 forment également une paroi aérodynamique continue de délimitation du flux extérieur. Lorsqu'un ordre d'inversion de poussée est transmis au système de commande de l'inverseur de poussée, sous l'action des vérins 8 dont le point d'application à l'extrémité de tige en 24 est situé sur la partie aval 20 du capotage mobile 14, après libération du verrou 21 de liaison à la structure fixe 1, ledit capotage mobile 14 est déplacé en translation axiale, en direction aval, par coopération des glissières 13 et rails 18 précédemment décrits. Ce déplacement découvre les grilles de déviation 10 pendant que les volets 15 viennent obstruer le canal secondaire, sous l'action conjuguée du déplacement de leur articulation avant 17 solidaire de la partie amont 19 du capotage mobile 14 et de leur liaison au capot primaire 9 fixe par les biellettes 16. Le flux inversé, symbolisé par la flèche 25 de la figure 2 est ainsi guidé à travers les grilles 10, procurant l'inversion de poussée correspondant notamment à une phase de freinage de l'avion. Durant cette phase, les deux parties amont 19 et aval 20 du capotage externe mobile 14 restent solidarisées par le verrou 22. Dans un troisième mode de fonctionnement remarquable et que l'invention permet d'obtenir dans des conditions avantageuses, qui est représenté aux figures 3 et 3a, la partie amont 19 du capotage mobile 14 est à nouveau verrouillée par le verrou 21 sur la structure fixe 1 de l'inverseur et par suite, les volets pivotants 15 sont en position rétractée commandée par la position de leur articulation avant 17 sur ladite partie amont 19. Les grilles de déviation 10 restent également masquées par ladite partie amont 19. Par contre, le verrou 22 est libéré, désolidarisant ainsi les parties aval 20 et amont 19 du capotage externe 14. Les vérins 8 commandent un déplacement limité de la seule partie aval 20 en translation axiale toujours selon les glissières 13 et rails 18, dans une direction aval, dégageant ainsi un passage 26 entre lesdites partie aval 20 et partie amont 19. Une partie du flux secondaire circulant dans le canal secondaire est alors éjectée par ledit passage 26, ce qui est symbolisé à la figure 3 par la flèche 27. De cette manière, notamment dans des phases de vol durant lesquelles un fonctionnement à pleine puissance du turboréacteur est exigé, par exemple lors du décollage, on obtient une adaptation de la section de la tuyère secondaire formée par le capotage externe 14 grâce à une augmentation de ladite section de tuyère. L'ajustement de cette section suivant l'importance du flux éjecté permet ainsi d'obtenir une optimisation du rendement et l'amélioration des performances telles que la consommation spécifique.

On notera également que les dispositions conformes à l'invention qui ont été décrites en référence aux figures 1 à 3a et notamment celles qui correspondent à un fonctionnement en augmentation de section de tuyère, en référence aux figures 3 et 3a procurent les avantages remarquables suivants :

— le déplacement des parties mobiles (la partie aval 20 du capotage seule dans ce cas) n'a pas de répercussion sur la section initiale de tuyère, notamment au col qui n'est pas modifiée ;
— l'emplacement prévu pour le passage complémentaire 26 d'éjection situé en aval des grilles 10 d'inversion permet de ménager une longueur réduite de passage du flux et de donner au passage 26 une orientation optimale par rapport à la direction et au sens du flux éjecté.

Par ailleurs, lorsque les capotages 19 et 20 sont verrouillés, soit en position de fonctionnement en poussée directe de croisière suivant les figures 1 et 1a, soit en position d'inversion de poussée suivant les figures 2 et 2a, la surface externe du capotage ne présente aucune ouverture qui serait génératrice de pertes aérodynamiques.

## Revendications

1. Inverseur de poussée d'un turboréacteur à double flux formé de deux ensembles délimitant un canal annulaire en forme de C qui comportent chacun un demi-capotage externe (14) mobile en translation axiale sous l'action de vérins (8) et supportant un ensemble de volets (15) susceptibles, en position déployée, de dévier le flux secondaire circulant dans ledit canal et, en position rétractée, de s'intégrer dans ledit demi-capotage de manière à former une surface aérodynamique continue de délimitation de la veine du flux secondaire, en poussée directe, un ensemble de structure fixe (1) qui porte une rangée annulaire de grilles (10) de déviation servant au guidage du flux inversé dans la position déployée de l'inverseur où la translation dudit demi-capotage externe mobile les découvre et un ensemble annulaire de liaison (4) au turboréacteur caractérisé en ce que chaque demi-capotage (14) aval mobile de l'inverseur comporte deux parties (19, 20) susceptibles d'être reliées par des moyens à verrou (22), une partie amont (19) de capotage mobile susceptible d'être reliée par un verrou (21) à la partie fixe amont (1) de l'inverseur et une partie aval (20) de capotage mobile susceptible d'être déplacée au moyen d'au moins un vérin (8) selon une direction axiale vers l'aval, soit en entraînant la partie amont (19) verrouillée sur ladite partie aval (20) et libérée de son verrouillage (21) sur la partie fixe (1) amont, soit indépendamment de la partie amont (19) après libération de leur verrou (22) mutuel, la partie amont (19) restant verrouillée sur la partie fixe (1) amont de manière selon les cas à masquer les grilles (10) de l'inverseur dans un fonctionnement en poussée directe correspondant à une phase de vol en croisière de l'avion ou à découvrir les grilles (10) d'inversion dans un fonctionnement en inversion de poussée, ou à laisser les grilles (10) d'inversion masquées tout en procurant une augmentation de la section de sortie de la tuyère secondaire d'éjection correspondant à un fonctionnement du turboréacteur à pleine puissance, au moyen d'un passage (26) dégagé en aval des grilles d'inversion (10).

## Patentansprüche

1. Schubumkehrvorrichtung für ein Zweistrahl-Turboluftstrahltriebwerk, bestehend aus zwei einen C-förmigen Ringkanal begrenzenden Aggregaten, die jeweils umfassen : eine mit Hilfe von Zylinder-Kolbenanordnungen (8) in axialer Richtung verschiebbare äußere Halbhaube (14), die eine Gruppe von Klappen (15) trägt, die in ausgestellter Position den in dem genannten Kanal zirkulierenden Sekundärkreis umlenken und sich in eingezogener Position derart in die Halbhaube einfügen können, daß sie bei direktem Schub eine kontinuierliche aerodynamische Begrenzungsfläche für die Strömung des Sekundärkreises bilden, ferner eine feste Konstruktionsgruppe, die eine ringförmige Reihe von Umlenkgittern (10) trägt, die in ausgefahrener Position der Schubumkehrvorrichtung, in der sie durch die Verschiebung der äußeren beweglichen Halbhaube freigelegt werden, zur Führung des invertierten Strahls dienen, sowie eine ringförmige Baugruppe (4), die zur Verbindung mit Turboluftstrahltriebwerk dient, dadurch gekennzeichnet, daß jede der stromabwärtigen beweglichen Halbhauben (14) zwei durch Verriegelungsmittel (22) verbindbare Teile (19, 20) aufweist, nämlich einen beweglichen stromaufwärtigen Haubenteil (19), der durch einen Riegel (21) mit dem festen stromaufwärtigen Teil (1) der Schubumkehrvorrichtung verbindbar ist, und einen beweglichen stromabwärtigen Haubenteil (20) der mit Hilfe wenigstens einer Zylinder-Kolbenanordnung (8) entweder durch Antreiben des an dem stromabwärtigen Teil (20) verriegelten und von seiner Verriegelung (21) an dem festen stromaufwärtigen Teil (1) gelösten stromaufwärtigen Teils (19) oder, nach dem Lösen der gegenseitigen Verriegelung (22), unabhängig von dem stromaufwärtigen Teil (19) in stromabwärtiger Richtung axial verschiebbar ist, wobei der stromaufwärtige Teil (19) an dem stromaufwärtigen festen Teil (1) verriegelt bleibt, so daß je nach Lage des Falls die Gitter (10) der Schubumkehrvorrichtung in einer Betriebsart mit direktem Schub, der einer Reiseflugphase des Flugzeugs entspricht, abgedeckt sind, oder in einem Betrieb mit Schubumkehr die Schubumkehrgitter (10) freigegeben werden, oder die Schubumkehrgitter (10) abgedeckt gelassen werden, wobei durch Freilegen eines Durchgangs (26) stromabwärts der Schubumkehrgitter (10) eine Vergrößerung des Austrittsquerschnitts der sekundären Auswurfdüse herbeigeführt wird, die einem Betrieb des Strahltriebwerks mit voller Leistung entspricht.

## Claims

1. Thrust reverser for a bypass turbojet engine formed by two assemblies delimiting an annular duct in the shape of a C which each comprise an outer half-cowling (14) mobile in axial translation under the action of rams (8) and supporting a set of shutters (15) capable, when in the deployed position, of diverting the secondary airflow circulating in the said duct and, in the retracted position, capable of integrating with the said half-cowling so as to form, when in the direct thrust position, an aerodynamically continuous surface delimiting the secondary airflow, a fixed structural assembly (1) which carries an annular row of flow-diverting louvres (10) serving to direct the reversed airflow with the thrust reverser in the deployed position when the translation of the said movable outer half-cowling uncovers them and an annular system (4) coupling it to the turbojet engine characterised in that each downstream movable half-cowling (14) of the thrust reverser comprises two parts (19, 20) capable of being coupled together by a latching means (22), an upstream part (19) of the movable cowling capable of being attached by a latch (21) to the fixed upstream part (1) of the thrust reverser and a downstream part (20) of the movable cowling capable of being displaced in an axially downstream direction by means of at least one ram (8), either taking with it the upstream part (19) locked onto the said downstream part (20) and released from its latch (21) on the fixed upstream part (1) or, independently of the upstream part (19) after the release of their common latch (22), the upstream part (19) remaining locked onto the fixed upstream part (1) in such a way, according to the circumstance, as to mask the louvres (10) of the thrust reverser when in direct thrust mode corresponding to a cruising phase of the aircraft's flight, or to uncover the flow-reversing louvres (10) when in reverse thrust mode, or to leave the flow-reversing louvres (10) masked at the same time as providing an increase in the cross section of the outlet of the secondary nozzle, corresponding to running the turbojet engine at full power, by means of a passage (26) created downstream of the flow-reversing louvres (10).

EP 0 315 524 B1

FIG:1

FIG:1a

6

FIG: 2

FIG: 2a

FIG:3

FIG:3a